# DEMANDE DE BREVET EUROPEEN

(11) **EP 4 607 771 A1**
(43) Date de publication de la demande: **27.08.2025**
(21) Numéro de dépôt: 25159491.7
(22) Date de dépôt: 21.02.2025
(51) Int. Cl.: H02K 5/22

(54) **CONNECTEUR DESTINÉ À RÉALISER UNE CONNEXION ÉLECTRIQUE ENTRE UN MOTEUR ÉLECTRIQUE ET UN ONDULEUR ET SYSTÈME COMPORTANT UN TEL CONNECTEUR**

(30) Priorité: 23.02.2024 FR 2401774
(71) Demandeur: Valeo eAutomotive Germany GmbH, 91056 Erlangen (DE)
(72) Inventeur: THANGARAJAN, Vivek, 600130 CHENNAI, TAMIL NADU (IN); LUCOT, Guillaume, 94046 CRETEIL CEDEX (FR); DEVIE, Nicolas, 94046 CRETEIL CEDEX (FR); AVALET, Arnaud, 94046 CRETEIL CEDEX (FR)
(74) Mandataire: Valeo Powertrain Systems

(57) **Abrégé**

L'invention concerne un connecteur destiné à réaliser une connexion électrique entre un moteur électrique et un onduleur, le connecteur comprenant :
- une pluralité d'éléments de connexion, chaque élément de connexion étant destiné à s'emboîter avec un élément de connexion électrique complémentaire du moteur électrique afin de les connecter électriquement l'un à l'autre ;et
- une pluralité de broches de connexion, chaque broche de connexion étant électriquement connectée à l'un des éléments de connexion et configurée pour traverser un orifice ménagé dans un boitier de l'onduleur afin de venir en contact avec une piste d'une barre d'interconnexion électrique de l'onduleur, l'orifice étant ménagé dans une paroi d'un carter onduleur comprenant l'onduleur.

## Description

### Domaine technique

L'invention se rapporte au domaine des machines rotatives électriques pour véhicule électriques, par exemple un moteur électrique, et aux dispositifs électriques connectés à ces machines dans un véhicule électrique, par exemple une batterie électrique ou un onduleur. En particulier, l'invention se rapporte aux connecteurs entre les machines rotatives électrique et les dispositifs électriques des véhicules électriques.

### Arrière-plan technologique

Un moteur électrique destiné à un véhicule électrique est généralement alimenté en courant alternatif. Un onduleur est donc nécessaire pour transformer l'alimentation électrique en courant continu de la batterie électrique à l'alimentation en courant alternatif pour faire tourner le moteur électrique à courant alternatif.

Généralement, l'onduleur, la batterie électrique et le moteur électrique sont positionnés et connectés ensemble au sein d'un même carter à bord du véhicule. Néanmoins, il est possible que le moteur électrique, la batterie électrique et le moteur ne soit pas assemblés ensemble en même temps.

Par exemple, il est possible que le moteur électrique à courant alternatif soit déjà préalablement monté dans un carter moteur et que l'on cherche alors à connecter ultérieurement l'onduleur avec le moteur électrique.

Il est alors souvent difficile de réaliser la connexion entre l'onduleur et le moteur électrique.

### Résumé de l'invention

Une idée à la base de l'invention est de faciliter la connexion électrique entre un onduleur et un moteur électrique.

Selon un mode de réalisation, l'invention fournit un connecteur destiné à réaliser une connexion électrique entre un moteur électrique et un onduleur, le connecteur comprenant :
- une pluralité d'éléments de connexion, chaque élément de connexion étant destiné à s'emboîter avec un élément de connexion électrique complémentaire du moteur électrique afin de les connecter électriquement l'un à l'autre ; et
- une pluralité de broches de connexion, chaque broche de connexion étant électriquement connectée à l'un des éléments de connexion et configurée pour traverser un orifice ménagé dans un boitier de l'onduleur afin de venir en contact avec une piste d'une barre d'interconnexion électrique de l'onduleur, l'orifice étant ménagé dans une paroi d'un carter onduleur comprenant l'onduleur.

Grâce à ces caractéristiques, le connecteur permet une connexion entre le moteur électrique et l'onduleur plus aisé.

La double connexion de la pluralité d'éléments de connexion du connecteur avec les éléments de connexion électrique complémentaires du moteur électrique et des broches de connexion du connecteur avec la barre d'interconnexion électrique de l'onduleur est plus aisée que la connexion directe entre l'onduleur et le moteur électrique. Le connecteur comprend aussi des pistes électriques reliant électriquement les éléments de connexion aux broches de connexion, et comprend aussi un corps isolant.

Grâce au connecteur facilitant la connexion, il est possible de réaliser une connexion à l'aveugle de l'onduleur avec le moteur électrique. Les opérations d'assemblage sont ainsi facilitées.

De plus, il est possible de seulement connecter la pluralité d'éléments de connexion du connecteur avec les éléments de connexion électrique complémentaires du moteur électrique dans un premier temps ; puis, dans un second temps, de connecter les broches de connexion du connecteur avec la barre d'interconnexion électrique de l'onduleur. L'inverse est également possible : dans un premier temps, seulement connecter les broches de connexion du connecteur avec la barre d'interconnexion électrique de l'onduleur ; puis, dans un second temps, connecter la pluralité d'éléments de connexion du connecteur avec les éléments de connexion électrique complémentaires du moteur électrique. Cela permet de ne pas directement connecter l'onduleur avec le moteur électrique.

Selon des modes de réalisation, un tel connecteur peut comporter une ou plusieurs des caractéristiques suivantes.

Selon un mode de réalisation, les éléments de connexion et les broches de connexion comprennent chacun un corps isolant et des conducteurs électriques, chaque corps isolant étant notamment réalisé dans un matériau plastique tel que des polymères.

Ainsi, le connecteur est plus souple que le carter onduleur, l'onduleur et/ou le moteur électrique ce qui permet de compenser un jeu entre l'onduleur et le moteur électrique.

Selon un mode de réalisation, l'invention fournit aussi un système comprenant un carter onduleur, un connecteur selon l'invention fixé au carter onduleur, un onduleur logé à l'intérieur du carter onduleur et une barre d'interconnexion électrique qui est logée à l'intérieur du carter onduleur, est raccordée électriquement à l'onduleur et comprend des pistes, le carter onduleur comprenant une pluralité d'orifices; chaque orifice étant positionné en regard de l'une des pistes de la barre d'interconnexion électrique; chaque broche de connexion du connecteur traversant l'un des orifices et étant en contact avec l'une des pistes.

Selon un mode de réalisation, le carter onduleur forme un couvercle destiné à fermer un carter moteur à l'intérieur duquel est logé un moteur électrique. Dans un cas particulier, le connecteur comprend des pates de fixation pour monter le connecteur sur le carter moteur.

Selon un mode de réalisation, les éléments de connexion du connecteur sont chacun adaptés pour s'emboîter avec un élément de connexion électrique complémentaire du moteur électrique lors d'un mouvement de fermeture du carter moteur par le carter onduleur.

Ainsi, il est possible d'assembler, à l'aveugle, l'onduleur avec le moteur électrique tout en fermant le carter moteur ce qui facilite encore plus les opérations d'assemblage.

Selon un mode de réalisation, les éléments de connexion du connecteur sont configurés pour s'emboîter avec les éléments de connexion électrique complémentaires selon des directions d'emboîtement parallèles les unes aux autres et le carter onduleur est configuré pour fermer le carter moteur selon un mouvement de fermeture dirigé selon une direction de fermeture ; la direction de fermeture étant parallèle aux directions d'emboîtement.

Selon un mode de réalisation, le carter onduleur et le carter moteur sont configurés de sorte qu'il n'existe qu'une seule position relative de fermeture.

Selon un mode de réalisation, l'invention fournit aussi un procédé d'assemblage d'un système selon l'invention, le procédé comprenant l'étape suivante :
- pré-positionner le carter onduleur par rapport au carter moteur de sorte que les éléments de connexion du connecteur sont en regard des éléments de connexion électrique complémentaires selon des directions d'emboîtement parallèles les unes aux autres ;
- déplacer le carter onduleur par rapport au carter moteur selon un mouvement de fermeture dirigé selon une direction de fermeture parallèle aux directions d'emboîtement jusqu'à une position relative de fermeture dans laquelle le carter onduleur ferme le carter moteur et les éléments de connexion du connecteur sont emboîtés avec les éléments de connexion électrique complémentaire du moteur électrique.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 est une représentation schématique d'un carter moteur qui est fermé par un carter onduleur à l'intérieur duquel est logé un onduleur 300 et dans lequel sont logés un moteur électrique et une batterie électrique le moteur électrique et l'onduleur étant électriquement connectés grâce à un connecteur.
La figure 2 représente une vue en perspective éclatée d'un carter onduleur et d'un connecteur destiné à réaliser une connexion électrique entre un moteur électrique et un onduleur.
La figure 3 est vue partielle en coupe selon l'axe III-III de la figure 2.
La figure 4 est une représentation schématique d'un carter moteur qui est fermé par un carter onduleur à l'intérieur duquel est logé un onduleur et dans lequel sont logés un moteur électrique et une batterie électrique le moteur électrique et l'onduleur étant électriquement connectés grâce à un premier connecteur et la batterie électrique et l'onduleur étant électriquement connecté grâce à un second connecteur.
La figure 5 illustre un connecteur dans un mode de réalisation avec des pistes électriques flexibles.
La figure 6 illustre la face arrière du connecteur selon le mode de réalisation illustré à la figure 5.
La figure 7 illustre un connecteur monté sur le moteur (partiellement illustré) et connecté à l'onduleur, à travers le carter de l'onduleur.

### Description des modes de réalisation

Un véhicule électrique ou hybride est doté d'une propulsion mécanique électrique. Cette propulsion électrique comprend un moteur électrique 510, une batterie électrique 600 et un onduleur 300.

L'onduleur 300 convertit le courant continu, fourni par la batterie électrique 600 en courant alternatif, dont le moteur électrique 510 a besoin pour entraîner les roues du véhicule électrique.

A cet effet, il est donc nécessaire de connecter électriquement le moteur électrique 510 avec l'onduleur 300 et la batterie électrique 600 avec l'onduleur 300.

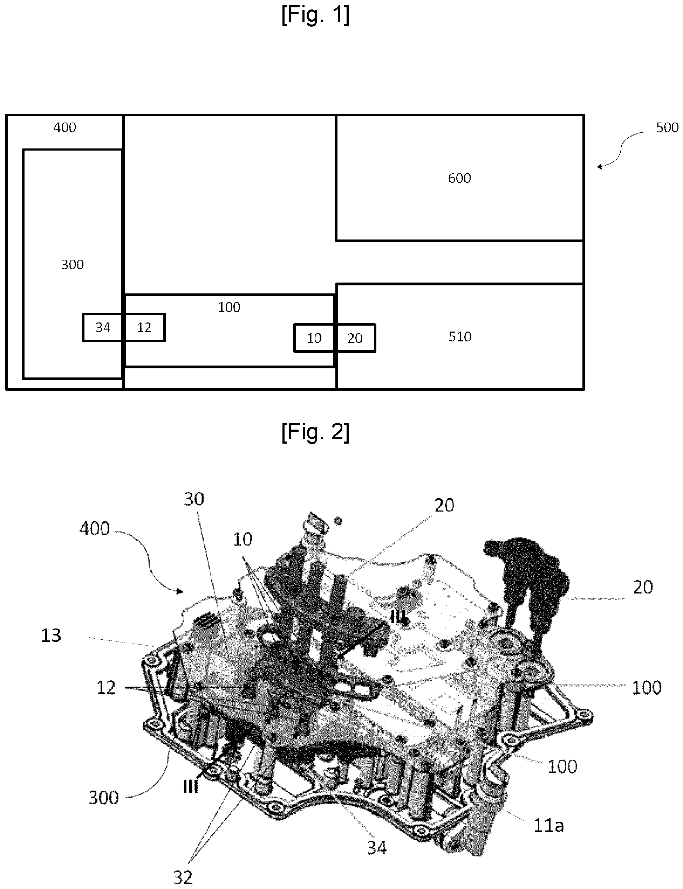

Un connecteur 100, tel qu'illustré à la figure 2, est, notamment, destiné à réaliser cette connexion électrique entre le moteur électrique 510 et l'onduleur 300 comme illustré schématiquement à la figure 1 (la connexion entre la batterie électrique 600 et l'onduleur 300 n'est pas représentée sur la figure 1).

Comme illustré à la figure 2, le connecteur 100 comprend une pluralité d'éléments de connexion 10 et une pluralité de broches de connexions 12 qui sont chacune électriquement connectées à l'un des éléments de connexion 10. Dans un mode de réalisation avantageux, le moteur électrique 510 est alimenté en triphasé et le connecteur 100 comporte trois éléments de connexion 10 et trois broches de connexions 12 qui correspondent chacune à l'une des trois phases U, V, W.

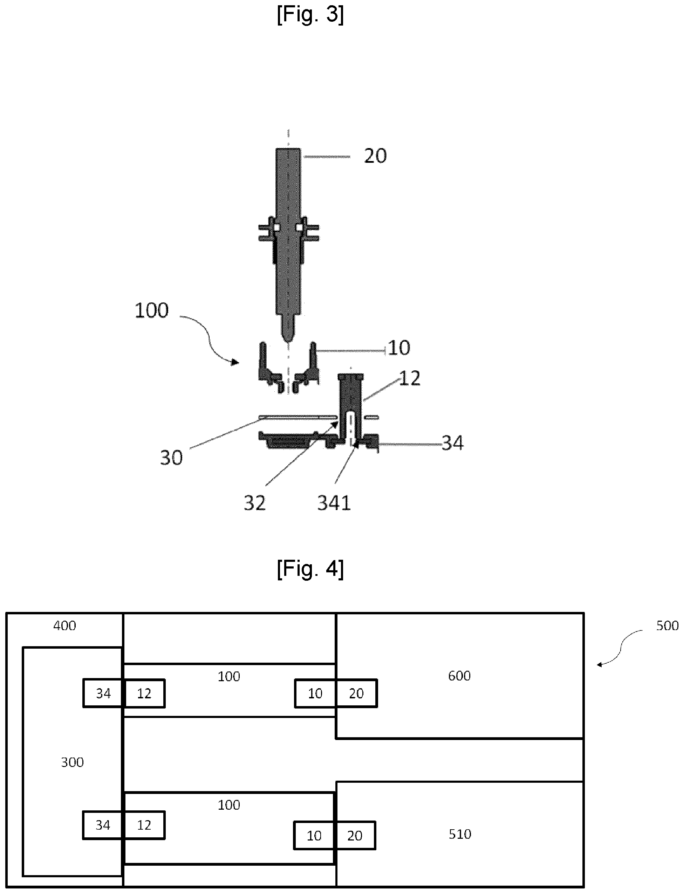

Par exemple, à la figure 3, il est illustré un élément de connexion 10 et une broche de connexion 12 faisant partie du connecteur 100.

Les éléments de connexion 10 et les broches de connexion 12 comprennent chacun un corps isolant et des conducteurs électriques, chaque corps isolant étant réalisé par exemple dans un matériau plastique tel qu'un polymère. Par exemple, chaque corps isolant est formé de sulfure de polyphénylène (PPS en abréviation), et notamment de sulfure de polyphénylène chargé à 30% de fibre de verre, ou de polybutylène téréphtalate (PBT en abréviation).

Les éléments de connexion 10 permettent de connecter le connecteur 100 au moteur électrique 510. Comme illustré à la figure 3, l'élément de connexion 10 est destiné à être positionné en regard d'un élément de connexion électrique complémentaire 20 du moteur électrique 510 à connecter avec l'onduleur 300.

La connexion électrique entre l'élément de connexion 10 du connecteur 100 et l'élément de connexion électrique complémentaire 20 du moteur électrique 510 peut être réalisé par un assemblage mâle-femelle. Dans ce cas, selon un premier mode de réalisation, l'élément de connexion 10 du connecteur 100 peut être l'élément mâle d'assemblage ou, selon un second mode de réalisation, l'élément de connexion électrique complémentaire 20 peut être l'élément mâle de l'assemblage.

Par exemple, à la figure 3, le connecteur électrique complémentaire 20 du moteur est l'élément mâle de l'assemblage et est inséré à l'intérieur de l'élément de connexion 10.

D'autres types d'assemblage entre l'élément de connexion 10 du connecteur 100 et l'élément de connexion électrique complémentaire 20 sont possibles. Par exemple, par vissage
Les broches de connexion 12 permettent de connecter le connecteur 100 à la barre d'interconnexion 34 de l'onduleur 300.

L'onduleur 300 et la barre d'interconnexion 34 sont logés à l'intérieur d'un carter onduleur 400. Une paroi 30 du carter onduleur 400 comprend une pluralité d'orifices 32. La figure 3 illustre une portion de la paroi 30 du carter onduleur 400 comprenant un orifice 32.

Comme l'illustre la figure 3, chaque broche de connexion 12 est configurée pour traverser l'orifice 32 et venir en contact avec une des pistes 341 de la barre d'interconnexion électrique 34 de l'onduleur 300.

Selon un mode de réalisation, les pistes 341 intègrent des zones de contact avec les broches de connexion qui sont élastiques : cela permet d'éviter un assemblage hyperstatique du connecteur 100 avec l'onduleur 300. Il peut notamment s'agir d'une boucle de souplesse.

Ainsi, le connecteur 100 permet de connecter électriquement l'élément de connexion électrique complémentaire 20 du moteur électrique 510 avec la broche d'interconnexion électrique 34 connectée à l'onduleur 300.

Le connecteur 100 facilite ainsi l'assemblage de l'onduleur 300 au moteur électrique 510 d'un véhicule électrique puisqu'il permet de connecter des éléments électriques non coaxiaux. En effet, comme illustré à la figure 3, l'élément de connexion électrique complémentaire 20 n'est pas forcément aligné avec la piste 341 correspondante.

De plus, le connecteur 100 permet de compenser, ou récupérer, un jeu entre l'onduleur 300 et le moteur électrique 510.

Le connecteur 100 comprend également des pistes électriques 11 reliant électriquement les éléments de connexion 10 aux broches de connexion 12 et comprend également un corps isolant 13.

Dans la suite de la description on définit la direction axiale comme la direction perpendiculaire au carter de l'onduleur traversé par les broches 12.

La figure 2 illustre le connecteur 100 dont des extrémités 11a des pistes sont assemblées aux broches de connexion 12. L'assemblage pourra se faire par vissage ou alternativement par soudure ou sertissage.

Les éléments de connexion 10 sont formés par des trous dans des extrémités 11b opposées aux extrémités 11a des pistes. Ces trous forment les connecteurs femelles pour l'assemblage mâle femelle avec les éléments complémentaires 20.

Un corps isolant 13 est moulé sur les pistes de sorte que les extrémités 11a dépassent du corps isolant 13 et que le corps isolant 13 présente des ouvertures dégageant les trous des extrémités 11b.

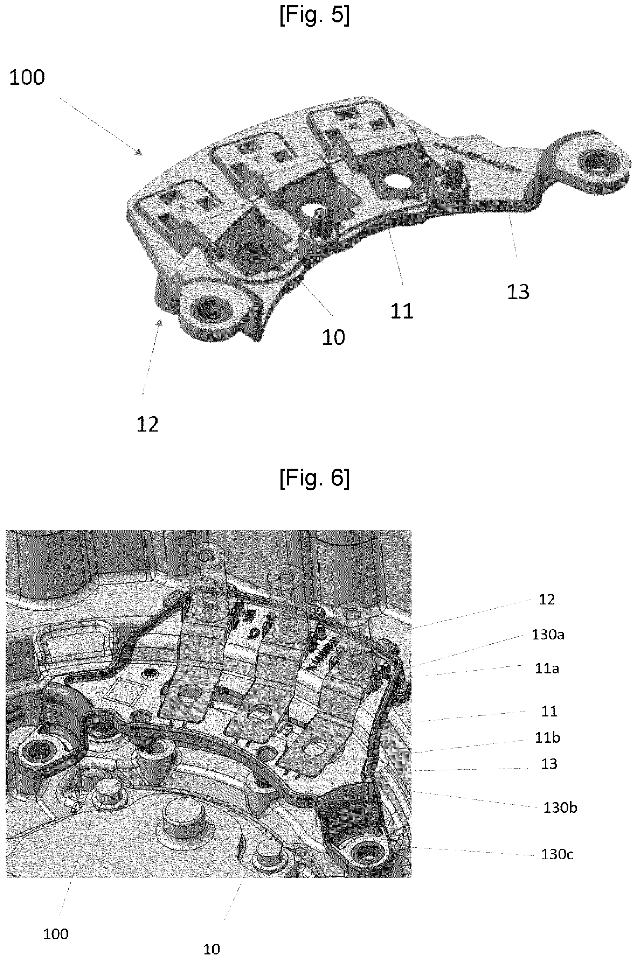

Dans un autre mode de réalisation illustré à la figure 5, les pistes 11 sont en matériau flexible par exemple multicouche, de préférence comprenant du Cuivre.

Dans ce mode de réalisation, les pistes 11 sont montées sur le corps isolant 13 du connecteur 100, par exemple par clipsage, comme illustré à la figure 6. Le corps isolant 13 peut avantageusement comprendre un système de pates 130a coopérant avec les pistes pour le maintenir axialement et radialement, avec un jeu d'assemblage possible. Un deuxième système d'attache avec des languettes 130b peut également être utilisé en complément du premier système.

Le corps couvre axialement les pistes d'un seul côté.

Comme illustré à la figure 5, le corps 13 couvre axialement les pistes à l'exception des trous d'extrémité 11b et d'une région autour des trous. Les extrémités 11b, en étant localement non contraintes axialement par le corps isolant 13, peuvent ainsi plus facilement se déformer.

Le corps isolant 13 comprend une fenêtre commune en regard de tous les trous des extrémités 11b.

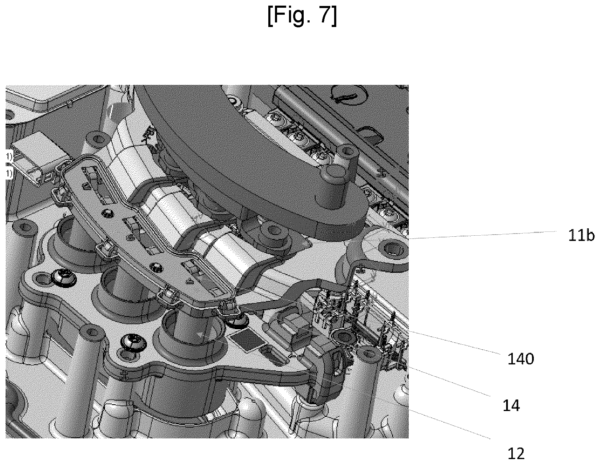

Un capot 14 peut éventuellement être prévu comme illustré à la figure 7 recouvrant axialement le corps isolant 13 au-dessus de la zone de connexion entre les extrémités 11a des pistes et les broches de connexion 12.

Le capot 14 est par exemple clipsé sur le corps isolant 13. Des pates 140 du capot s'étendent à travers des orifices du corps isolant 13 pour appuyer sur les pistes 11 dans les zones de connexion avec les broches 12.

Le corps isolant 13 du connecteur est fixé sur le moteur. Le corps isolant peut avantageusement comprendre des pâtes de fixation 130c pour des vis, permettant le montage du connecteur 100 sur le moteur. Lors de l'assemblage, notamment directement par des vis, des conducteurs issus du moteur (éléments de connexion électrique complémentaires du moteur électrique 20) sont insérés directement dans les trous des pistes au niveau des extrémités 11b (éléments de connexion du connecteur 10). Les broches de connexion du connecteur 12 sont ensuite assemblées avec la barre d'interconnexion électrique de l'onduleur 34 (assemblage à l'aveugle avec le carter onduleur 400).

Le connecteur 100 peut être fixé à un carter onduleur 400 et seulement connecté à la barre d'interconnexion 34. La figure 2 illustre un tel carter onduleur 400.

A la figure 2, le carter onduleur 400 comprend l'onduleur 300 logé en son sein et une barre d'interconnexion 34 - comprenant une pluralité de pistes 341 - raccordée électriquement à l'onduleur 300.

Le carter onduleur 400 comprend une pluralité d'orifices 32 et chacun de ces orifices 32 est positionné en regard de l'une des pistes 341 de la barre d'interconnexion électrique 34. Ainsi, chaque broche de connexion 12 du connecteur 100 traverse l'un des orifices 32 et est alors en contact avec l'une des pistes 341.

Le carter onduleur 400 est alors prêt à être connecté au moteur électrique 510. Grâce au connecteur 100, cette connexion avec le moteur électrique 510 peut être réalisée lors d'un assemblage à l'aveugle entre le carter onduleur 400 et un carter moteur 500 à l'intérieur duquel est logé le moteur électrique 510 et la batterie électrique 600.

Le carter onduleur 400 forme alors un couvercle destiné à fermer ce carter moteur 500. Les éléments de connexion 10 du connecteur 100 sont chacun adaptés pour s'emboîter avec un élément de connexion électrique complémentaire 20 du moteur électrique 510 lors du mouvement de fermeture du carter moteur 500 par le carter onduleur 400.

Par exemple, les éléments de connexion 10 du connecteur 100 s'emboîtent avec les éléments de connexion électrique complémentaires 20 selon des directions d'emboîtement parallèles les unes aux autres.

Pour pouvoir connecter les éléments de connexion 10 du connecteur 100 avec les éléments de connexion électrique complémentaires 20 du moteur, la direction de fermeture selon laquelle le carter onduleur 400 est configuré pour fermer le carter moteur 500 doit être parallèle aux directions d'emboîtement.

A cet effet, le carter onduleur 400 est pré-positionné par rapport au carter moteur 500 de sorte que les éléments de connexion 10 du connecteur 100 sont en regard des éléments de connexion électrique complémentaires 20 du moteur électrique 510 selon des directions d'emboîtement parallèles les unes aux autres.

Ainsi, lors d'un mouvement de fermeture dans lequel le carter onduleur 400 est déplacé par rapport au carter moteur 500 selon une direction de fermeture parallèle aux directions d'emboîtement, les éléments de connexion 10 du connecteur 100 s'emboîtent avec les éléments de connexion électrique complémentaires 20. Ainsi, le carter onduleur 400 et le carter moteur 500 sont dans une position relative de fermeture dans laquelle le carter onduleur 400 ferme le carter moteur 500.

Ainsi, l'assemblage de l'onduleur 300 avec le moteur électrique 510 peut être réalisé à l'aveugle puisque le mouvement de fermeture du carter moteur 500 par le carter onduleur 400 permet d'emboiter les éléments de connexion 10 du connecteur 100 avec les éléments de connexion électrique complémentaire 20 du moteur électrique 510.

Selon un mode de réalisation, le carter onduleur 400 et le carter moteur sont configurés de sorte qu'il n'existe qu'une seule position relative de fermeture.

Selon un mode de réalisation, le ou les éléments de connexion électrique complémentaires 20 sont fixés au carter moteur 500 par un assemblage par filetage.

Un second connecteur 100 peut également être utilisé pour connecter l'onduleur 300 avec la batterie électrique 600. La figure 4 illustre ce mode de réalisation.

Dans ce cas, le connecteur 100 destiné à réaliser la connexion électrique entre le moteur électrique 510 et l'onduleur 300 du véhicule électrique est un premier connecteur 100.

Dans ce même cas, de manière analogue au moteur électrique 510, la batterie électrique 600 comprend une pluralité d'éléments de connexion complémentaires 20 adaptés pour être connectés avec la pluralité d'éléments de connexion 10 du connecteur 100.

Comme illustré à la figure 4, une seconde barre d'interconnexion 34 peut être prévue pour connecter l'onduleur 300 avec le second connecteur 100. La barre d'interconnexion 34 connectant l'onduleur 300 avec le premier connecteur 100 est alors une première barre d'interconnexion 34.

De manière analogue au premier connecteur 100, le second connecteur 100 peut être électriquement connecté à l'onduleur 300, i.e. les broches de connexion 12 de ce second connecteur 100 sont en contact avec une piste 341 d'une barre de connexion 34 de l'onduleur 300.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Connecteur (100) destiné à réaliser une connexion électrique entre un moteur électrique (510) et un onduleur (300), le connecteur comprenant :
- une pluralité d'éléments de connexion (10), chaque élément de connexion (10) étant destiné à s'emboîter avec un élément de connexion électrique complémentaire (20) du moteur électrique afin de les connecter électriquement l'un à l'autre ;et
- une pluralité de broches de connexion (12), chaque broche de connexion étant électriquement connectée à l'un des éléments de connexion (10) et configurée pour traverser un orifice (32) afin de venir en contact avec une piste (341) d'une barre d'interconnexion électrique (34) de l'onduleur, l'orifice (32) étant ménagé dans une paroi (30) d'un carter onduleur (400) comprenant l'onduleur (300).

2. Connecteur selon la revendication 1, dans lequel les éléments de connexion (10) et les broches de connexion (12) comprennent chacun un corps isolant et des conducteurs électriques, chaque corps isolant étant notamment réalisé dans un matériau plastique tel que des polymères.

3. Système comprenant un carter onduleur (400), un connecteur selon la revendication 1 ou 2 fixé au carter onduleur, un onduleur (300) logé à l'intérieur du carter onduleur et une barre d'interconnexion électrique qui est logée à l'intérieur du carter onduleur, est raccordée électriquement à l'onduleur (300) et comprend des pistes (341), le carter onduleur (400) comprenant une pluralité d'orifices (32) ;
chaque orifice (32) étant positionné en regard de l'une des pistes (341) de la barre d'interconnexion électrique (34);
chaque broche de connexion (12) du connecteur traversant l'un des orifices et étant en contact avec l'une des pistes (341).

4. Système selon la revendication précédente dans lequel le carter onduleur (400) forme un couvercle destiné à fermer un carter moteur à l'intérieur duquel est logé un moteur électrique.

5. Système selon la revendication précédente, dans lequel les éléments de connexion (10) du connecteur (100) sont chacun adaptés pour s'emboîter avec un élément de connexion électrique complémentaire (20) du moteur électrique lors d'un mouvement de fermeture du carter moteur par le carter onduleur (400).

6. Système selon l'une des revendications 4 ou 5, dans lequel les éléments de connexion (10) du connecteur sont configurés pour s'emboîter avec les éléments de connexion électrique complémentaires (20) selon des directions d'emboîtement parallèles les unes aux autres et dans lequel le carter onduleur (300) est configuré pour fermer le carter moteur selon un mouvement de fermeture dirigé selon une direction de fermeture et dans laquelle la direction de fermeture est parallèle aux directions d'emboîtement.

7. Système selon la revendication 4 à 6, comprenant en outre un carter moteur et un moteur électrique (510) logé dans le carter moteur, le moteur électrique comprenant des éléments de connexion électrique complémentaires (20) ; le carter onduleur (300) et le carter moteur configurés pour être positionnés dans une position relative de fermeture dans laquelle les éléments de connexion(10) du connecteur sont emboîtés avec les éléments de connexion électrique complémentaires (20) du moteur électrique (510).

8. Système selon la revendication 7, dans lequel le carter onduleur (300) et le carter moteur (500) sont configurés de sorte qu'il n'existe qu'une seule position relative de fermeture.

9. Système selon la revendication précédente dans lequel le ou les éléments de connexion électrique complémentaires (20) sont fixés au carter moteur par un assemblage par filetage.

10. Procédé d'assemblage d'un système selon la revendication 7, le procédé comprenant l'étape suivante :
- pré-positionner le carter onduleur (400) par rapport au carter moteur de sorte que les éléments de connexion (10) du connecteur (100) sont en regard des éléments de connexion électrique complémentaires (20) selon des directions d'emboîtement parallèles les unes aux autres ;
- déplacer le carter onduleur (400) par rapport au carter moteur selon un mouvement de fermeture dirigé selon une direction de fermeture parallèle aux directions d'emboîtement jusqu'à une position relative de fermeture dans laquelle le carter onduleur (300) ferme le carter moteur et les éléments de connexion (10) du connecteur sont emboîtés avec les éléments de connexion électrique complémentaire (20) du moteur électrique.
